(19)

Europäisches
Patentamt
European
Patent Office
Office européen
des brevets

(11)  **EP 3 438 308 A1**

(12)  # EUROPEAN PATENT APPLICATION
published in accordance with Art. 153(4) EPC

(43) Date of publication:
**06.02.2019  Bulletin 2019/06**

(21) Application number: **17773561.0**

(22) Date of filing: **24.01.2017**

(51) Int Cl.:
*C22C 38/00* (2006.01)      *C21D 8/02* (2006.01)
*C21D 9/46* (2006.01)      *C22C 38/38* (2006.01)

(86) International application number:
**PCT/JP2017/002300**

(87) International publication number:
**WO 2017/169011 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **30.03.2016  JP 2016067059**

(71) Applicant: **Nisshin Steel Co., Ltd.
Chiyoda-ku, Tokyo 100-8366 (JP)**

(72) Inventors:
• **MITSUNAGA Seiji**
**Tokyo 100-8366 (JP)**
• **EBIHAMA Nobuhisa**
**Tokyo 100-8366 (JP)**
• **EHARA Yasuhiro**
**Tokyo 100-8366 (JP)**
• **IMAKAWA Kazunari**
**Tokyo 100-8366 (JP)**

(74) Representative: **Wagner & Geyer
Partnerschaft
Patent- und Rechtsanwälte
Gewürzmühlstrasse 5
80538 München (DE)**

(54)  **TI-CONTAINING FERRITIC STAINLESS STEEL SHEET, MANUFACTURING METHOD, AND FLANGE**

(57)    [Problem] To provide a hot rolled steel sheet having a large gauge thickness of a Ti-containing ferritic stainless steel excellent in toughness.

[Solution] A Ti-containing ferritic stainless steel sheet having a chemical composition containing, in terms of percentage by mass, from 0.003 to 0.030% of C, 2.0% or less of Si, 2.0% or less of Mn, 0.050% or less of P, 0.040% or less of S, from 10.0 to 19.0% of Cr, 0.030% or less of N, from 0.07 to 0.50% of Ti, from 0.010 to 0.20% of Al, from 0 to 1.50% of Mo, and from 0 to 0.0030% of B, with the balance of Fe and unavoidable impurities, having a K value defined by the following expression of 150 or more: K value = - $0.07 \times$ Cr - $6790 \times$ Free(C+N) - $1.44 \times$ d + 267, and having a sheet thickness of from 5.0 to 11.0 mm. Herein, Free (C+N) corresponds to the solid-dissolved (C+N) concentration (% by mass), and d represents an average crystal grain diameter ($\mu$m).

**EP 3 438 308 A1**

**Description**

[Technical Field]

The present invention relates to a Ti-containing ferritic stainless steel sheet having a large gauge thickness excellent in toughness, and a method for manufacturing the same. The invention also relates to a flange using the Ti-containing ferritic stainless steel sheet.

[Background Art]

Members for an automobile exhaust gas flow path are demanded to have such characteristics as corrosion resistance, heat resistance, strength, and the like. As a material that is excellent in these characteristics, an austenitic stainless steel sheet has been frequently used. In recent years, there is an increasing need to use a ferritic type steel, which has a small thermal expansion coefficient and a small raw material cost, instead of an austenitic type steel. Examples of the alternate material therefor include a Ti-containing ferritic stainless steel sheet.

Members for an automobile exhaust gas flow path are generally produced by subjecting a cold rolled and annealed steel sheet to a press work, or forming a cold rolled and annealed steel sheet into a pipe, and then subjecting the resultant to various works. A member for an automobile exhaust gas flow path in recent years may frequently have a complicated shape, and the cold rolled and annealed steel sheet as a material therefor is demanded to have excellent workability. For providing a cold rolled and annealed steel sheet having good workability, it is advantageous to enhance the cold rolling reduction ratio. For ensuring the sufficient cold rolling reduction ratio, it is effective to use a hot rolled and annealed steel sheet having a large gauge thickness (for example, a sheet thickness of 5.0 mm or more). Furthermore, there is a large need of a steel sheet having a large gauge thickness (for example, a sheet thickness of from 5.0 to 11.0 mm) for a flange or the like used in an automobile exhaust gas flow path. With a larger sheet thickness, the influence of the reduction in toughness tends to be conspicuous.

In the case where a hot rolled and annealed steel sheet having a large gauge thickness is directed to a cold rolling step, when the steel sheet has low toughness, such measures are required that the steel sheet is limited to one passing through a line having a looper with a large diameter for moderating the flexure of the sheet, and the number of times of the intermediate annealing in the cold rolling step is increased. These measures involve deterioration of the productivity and increase of the production cost. Also in the case where a flange is produced with a steel sheet having a large gauge thickness as a material, the material is demanded to have good toughness.

[Citation List]

[Patent Literatures]

PTL 1: JP-A-60-228616
PTL 2: JP-A-64-56822
PTL 3: JP-A-2012-140688

[Summary of Invention]

[Technical Problem]

In general, a steel sheet having a large gauge thickness of a Ti-containing ferritic stainless steel tends to be reduced in low temperature toughness. As a method for enhancing the toughness of the Ti-containing ferritic stainless steel sheet, PTL 1 describes a method of subjecting a steel sheet to quenching after the hot rolling, and coiling the steel sheet at a temperature of 450ºC or less. PTL 2 describes a method of increasing the finish hot rolling temperature corresponding to the composition, and quenching the steel sheet with water after coiling. However, even though these measures are performed, there are cases where the reliability to the toughness becomes insufficient when a steel sheet having a large sheet thickness is passed through the line. PTL 3 describes a method of coiling a steel sheet at 570ºC or more to provide a coil, and after retaining the coil for 5 minutes or more in such a state that the outermost surface temperature of the coil is 550ºC, immersing the coil in a water bath. However, there are cases where a further enhancement of the low temperature toughness is demanded depending on the crystal grain diameter of the hot rolled steel sheet.

An object of the invention is to provide a steel sheet having a large gauge thickness of a Ti-containing ferritic stainless steel excellent in toughness, and a flange using the same.

[Solution to Problem]

According to the studies made by the present inventors, it has been found that the toughness of a steel sheet having a large gauge thickness of a Ti-containing ferritic stainless steel is enhanced by decreasing the amounts of C and N that are solid-dissolved in the matrix of the ferrite phase, but the extent of the enhancement is largely influenced by the ferritic crystal grain diameter. The invention has been completed based on the knowledge.

The object can be achieved by the following inventions.

(1) A Ti-containing ferritic stainless steel sheet having a chemical composition containing, in terms of percentage by mass, from 0.003 to 0.030% of C, 2.0% or less of Si, 2.0% or less of Mn, 0.050% or less of P, 0.040% or less of S, from 10.0 to 19.0% of Cr, 0.030% or less of N, from 0.07 to 0.50% of Ti, and from 0.010 to 0.20% of Al, with the balance of Fe and unavoidable impurities, having a K value defined by the following expression (1) of 150 or more, and having a sheet thickness of from 5.0 to 11.0 mm:

$$\text{K value} = -0.07 \times \text{Cr} - 6790 \times \text{Free(C+N)} - 1.44 \times d + 267 \quad (1)$$

wherein in the expression (1), Cr represents a Cr content (% by mass) in the steel; Free(C+N) represents a value (% by mass) obtained by subtracting a total content (% by mass) of C and N present in an extraction residue recovered by an electrolytic extraction method, from a total content (% by mass) of C and N present in the steel; and d represents an average crystal grain diameter ($\mu$m) obtained for an observation surface obtained by polishing a cross section (L cross section) in parallel to a rolling direction and a sheet thickness direction, by an intercept method with a linear testing line defined in Annex C of JIS G0551:2013.

(2) The Ti-containing ferritic stainless steel sheet according to the item (1), wherein the Ti-containing ferritic stainless steel sheet has the chemical composition further containing, in terms of percentage by mass, 1.50% or less of Mo.

(3) The Ti-containing ferritic stainless steel sheet according to the item (1) or (2), wherein the Ti-containing ferritic stainless steel sheet has the chemical composition further containing, in terms of percentage by mass, 0.0030% or less of B.

(4) A method for producing the Ti-containing ferritic stainless steel sheet according to any one of the items (1) to (3), containing:

a step of heating a slab of a steel having the chemical composition in a heating furnace, then taking out the slab at a temperature of from 950 to 1,120ºC from the furnace, rolling the slab with a rough rolling mill to provide an intermediate slab having a sheet thickness of from 20 to 50 mm and a surface temperature of from 700 to 850ºC, then hot-rolling the intermediate slab to a sheet having a thickness of from 5.0 to 11.0 mm, and then coiling the sheet at a surface temperature of from 650 to 800ºC, so as to provide a hot rolled steel sheet; and a step of annealing the hot rolled steel sheet at from 800 to 1,100ºC.

(5) A flange using the Ti-containing ferritic stainless steel sheet according to any one of the items (1) to (3).

(6) The flange according to the item (5), wherein the flange is a flange for an exhaust gas flow path.

(7) The flange according to the item (5), wherein the flange is a flange for an automobile exhaust gas flow path.

[Advantageous Effects of Invention]

According to the invention, a steel sheet having a large gauge thickness of a Ti-containing ferritic stainless steel excellent in toughness can be stably achieved. The steel sheet is enhanced particularly in low temperature toughness, and thus the restrictions in the passing condition to the line and the production condition can be alleviated. The steel sheet having a large gauge thickness has high reliability in toughness even in the case where the steel sheet having a large gauge thickness as a material is worked into various members (such as a flange for an automobile exhaust gas flow path.

[Description of Embodiments]

Chemical Composition

The invention targets a ferritic stainless steel containing the following component elements. The percentage for the chemical composition of the steel sheet is percentage by mass unless otherwise indicated.

C hardens the steel and is a factor that reduces the toughness of the hot rolled and annealed steel. The C content (i.e., the total amount of dissolved C and C present as a compound) is restricted to 0.030% or less. The C content is preferably 0.020% or less, and may be managed to 0.015% or less. An excessive decrease of C may increase the load on steel making and may increase the cost. A steel sheet having a C content of 0.003% or more is targeted herein.

Si and Mn are effective as a deoxidizing agent, and in addition, have a function that enhances the high temperature oxidation resistance. It is more effective to ensure the content of 0.02% or more for Si and 0.10% or more for Mn. Large amounts of these elements contained may be a factor causing the embrittlement of the steel. The Si content is restricted to 2.0% or less, and more preferably 1.0% or less. The Mn content is also restricted to 2.0% or less, and more preferably 1.0% or less.

Large amounts of P and S contained may be a factor that reduces the corrosion resistance. The P content is allowed to be up to 0.050%, and the S content is allowed to be up to 0.040%. An excessive decrease of P and S may increase the load on steel manufacturing and may not be economically effective. In general, the P content may be controlled in a range of from 0.010 to 0.050%, and the S content may be controlled in a range of from 0.0005 to 0.040%.

Cr is important for ensuring the corrosion resistance as a stainless steel. Cr is also effective for enhancing the high temperature oxidation resistance. For exhibiting these functions, the Cr content is required to be 10.0% or more. A large amount of Cr contained may harden the steel to impair the improvement of the toughness of the hot rolled and annealed steel sheet having a large gauge thickness in some cases. A steel sheet having a Cr content of 19.0% or less is targeted herein.

N is a factor that reduces the toughness of the hot rolled and annealed steel as similar to C. The N content (i.e., the total amount of dissolved N and N present as a compound) is restricted to 0.030% or less. The N content is preferably 0.020% or less, and may be managed to 0.015% or less. An excessive decrease of N may increase the load on steel manufacturing and may increase the cost. In general, the N content may be controlled in a range of 0.003% or more.

Ti forms a Ti carbonitride through bonding with C and N to suppress the segregation of a Cr carbonitride at the grain boundaries, and thus is an element that is considerably effective for retaining the corrosion resistance and the high temperature oxidation resistance of the steel. The Ti content is necessarily 0.07% or more, more effectively 0.09% or more, and further preferably 0.15% or more. An excessive large Ti content is not preferred since the reduction of the toughness of the hot rolled and annealed steel sheet may be promoted. As a result of various investigations, the Ti content is restricted to 0.50% or less, and Ti is more preferably contained in an amount in a range of 0.40% or less. In the description herein, the "carbonitride" means a compound containing a metal element bonded to at least one of C and N. As for the Ti carbonitride, for example, TiC, TiN, and Ti(C,N) are encompassed therein.

Al is effective as a deoxidizing agent. For achieving the function sufficiently, it is effective to add Al to make an Al content of 0.010% or more. A large amount of Al contained may be a factor that reduces the toughness. The Al content is restricted to 0.20% or less.

Mo is effective for enhancing the corrosion resistance, and may be added depending on necessity. In this case, a Mo content of 0.01% or more is more effective. A large amount of Mo contained may adversely affect the toughness in some cases. The Mo content is in a range of from 0 to 1.50%.

B is effective for enhancing the secondary workability, and may be added depending on necessity. In this case, it is more effective to ensure the content thereof of 0.0010% or more. However, when the B content exceeds 0.0030%, the uniformity of the metal structure may be impaired due to the formation of $Cr_2B$ to reduce the workability in some cases. The B content may be in a range of from 0 to 0.0030%.

K Value

The K value defined by the expression (1) is an index that accurately estimates the Charpy impact value ($J/cm^2$) at 20$\underline{o}$C by the U-notch impact test piece (having the impact direction perpendicular to the rolling direction and the sheet thickness direction) of the steel sheet having a large gauge thickness (a sheet thickness of from 5.0 to 11.0 mm) of the Ti-containing ferritic stainless steel having the aforementioned chemical composition range, from the Cr content in the steel, the solid-dissolved C and N amount, and the average crystal grain diameter.

$$K\ value\ =\ -0.07{\times}Cr\ -\ 6790{\times}Free(C+N)\ -\ 1.44{\times}d\ +\ 267 \qquad (1)$$

In the expression (1), Cr represents the Cr content (% by mass) in the steel; Free(C+N) represents a value (% by mass) obtained by subtracting the total content (% by mass) of C and N present in the extraction residue recovered by the electrolytic extraction method, from the total content (% by mass) of C and N present in the steel; and d represents the average crystal grain diameter ($\mu$m) obtained for an observation surface obtained by polishing a cross section (L cross section) in parallel to the rolling direction and the sheet thickness direction, by the intercept method with a linear testing line defined in Annex C of JIS G0551:2013.

According to the detailed investigations by the inventors, it has been found that the toughness of the Ti-containing ferritic stainless steel sheet having a large gauge thickness around ordinary temperature is strongly influenced by the Cr content, the solid-dissolved C and N amount, and the ferritic average crystal grain diameter. It has been confirmed that in the case where the aforementioned chemical composition is satisfied, and the Cr content, the solid-dissolved C and N amount, and the average crystal grain diameter are controlled to make a K value of 150 or more, the reliability relating to the toughness can be sufficiently ensured when the steel sheet having a large thickness is worked into a steel pipe or various members or subjected to cold rolling to provide a steel sheet having a small gauge thickness. Accordingly, the K value is required to be 150 or more in the description herein. The solid-dissolved C and N amount and the ferritic average crystal grain diameter in the hot rolled and annealed steel sheet can be controlled by the hot rolling condition described later, and a hot rolled and annealed steel sheet having a K value of 150 or more can be selectively produced.

In the expression (1), Free(C+N) corresponds to the solid-dissolved C and N amount (% by mass) . The value of Free (C+N) can be obtained in the following manner.

Method for obtaining Free(C+N)

In a non-aqueous electrolytic solution containing 10% by mass of acetylacetone, 1% by mass of tetramethylammonium chloride, and 89% by mass of methyl alcohol, a specimen having a known mass collected from the steel sheet is subjected to a potential of from -100 mV to 400 mV with respect to a saturated calomel electrode (SCE) to dissolve the matrix (metallic substrate) of the specimen completely, then the liquid containing the undissolved matter is filtered with a membrane filter having a pore diameter of 0.05 $\mu$m, and the solid matter remaining on the filter is recovered as the extraction residue. C and N in the extraction residue each are analyzed by the high frequency combustion-infrared absorption method for C and the impulse heat melting-thermal conductivity method for N, and the total content of C and N present in the extraction residue Insol(C+N) (% by mass in the steel) is calculated. Free (C+N) (% by mass) is obtained by the following expression (2).

$$\mathrm{Free(C+N) \ = \ Total(C+N) \ - \ Insol(C+N)(2)}$$

Herein, Total(C+N) represents the total content (% by mass) of C and N present in the steel, and Insol (C+N) represents the total content (% by mass) of C and N present in the extraction residue.

Sheet Thickness

The Ti-containing ferritic stainless steel is one of the types of steel that are useful for the purpose of a member for an automobile exhaust gas flow path from the standpoint of the material characteristics including the corrosion resistance, the heat resistance, and the like. For working into a member for an automobile exhaust gas flow path, the material steel sheet is demanded to have excellent workability. For enhancing the Lankford value (r value) as an index of the workability, it is effective to increase the cold rolling reduction ratio. For achieving a large cold rolling reduction ratio it is advantageous to use a hot rolled steel sheet having a large gauge thickness. On the other hand, the Ti-containing ferritic stainless steel is a steel type that tends to undergo reduction in toughness of the steel sheet in a temperature range on the low temperature side with respect to ordinary temperature. In a steel sheet having a large gauge thickness, the influence of the reduction in toughness tends to be conspicuous.

As a result of various investigations, for enhancing the r value of a cold rolled steel sheet, it is considerably effective to apply a hot rolled steel sheet having a sheet thickness of 5.0 mm or more. In the invention, accordingly, the improvement in toughness is intended for a hot rolled steel sheet having a sheet thickness of 5.0 mm or more as a target. It is more effective to target a hot rolled steel sheet having a sheet thickness of 5.5 mm or more. With a too large sheet thickness, the load in the ordinary line, through which the steel sheet is passed, in the cold rolling step may be excessive in some cases. A steel sheet having a sheet thickness of 11.0 mm or less is targeted herein. The sheet thickness is more preferably 9.0 mm or less.

Production Method

The Ti-containing ferritic stainless steel sheet having a large gauge thickness excellent in toughness can be produced with an ordinary production apparatus for a hot rolled stainless steel sheet. An example of the production method will be shown below.

Melting and Casting

A cast slab is produced by the continuous casting method. The slab may also be produced by producing a cast ingot by the ingot casting method and forging or blooming the ingot. The thickness of the slab is preferably from 200 to 250 mm.

Heating of Slab

The slab is placed in a heating furnace and heated to a temperature of 950ºC or more. The heating time (i.e., the period of time where the material temperature is maintained at 950ºC or more) may be set, for example, to a range of from 50 to 120 minutes. By heating to a temperature of 950ºC or more, coarse TiC formed on casting is decomposed to Ti and C, resulting in a structure state where TiC substantially disappeared. TiN is still not completely decomposed at 1,150ºC, but there is no particular need to stick to complete dissolution of N. The maximum achieving temperature of the material may be set in a range of 1,120ºC or less, and the material temperature on taking out from the furnace (extraction temperature) is required to be controlled to the temperature range described later.

Rough Rolling

The slab after heating is taken out at a extraction temperature of from 950 to 1,120ºC from the furnace, and rolled with a rough rolling mill. When the extraction temperature is higher than the range, the average crystal grain diameter of the recrystallized ferrite phase tends to be coarse, and it may be difficult to provide a hot rolled steel sheet having a K value of 150 or less. The rough rolling may be performed by one pass or plural passes of rolling, so as to provide an intermediate slab having a sheet thickness of from 20 to 50 mm. At this time, it is important to control the surface temperature of the intermediate slab obtained by the rough rolling to from 700 to 850ºC. Specifically, the extraction temperature and the rough rolling pass schedule are configured to provide at least the final pass temperature of the rough rolling in a range of from 700 to 850ºC. This temperature range overlaps the temperature range where re-precipitation of TiC occurs. When TiC is re-precipitated during the rough rolling from the state where substantially no undissolved TiC remains, fine TiC are formed from many sites. In the intermediate slab, a Ti carbonitride is formed from the many TiC particles or already-precipitated TiN particles having been as nuclei, and finely dispersed therein. The finely dispersed Ti carbonitride exerts a function of suppressing the ferritic recrystallized grains from becoming coarse, by the pinning effect. In the case where the rough rolling is performed at a high temperature providing a surface temperature of the intermediate slab exceeding 850ºC, the rough rolling is performed at a higher temperature than the temperature where TiC is actively re-precipitated, and therefore the pinning effect is not sufficiently exerted to form coarse crystal grains, i.e., the effect of providing fine crystal grains becomes insufficient. On the other hand, the surface temperature of the intermediate slab lower than 700ºC, becomes a factor increasing the deformation resistance in the finish hot rolling described later or making the coiling temperature too low. The total rolling reduction ratio of the rough rolling is preferably from 80 to 90%.

Finish Hot Rolling

The series of hot rolling performed for the intermediate slab until coiling is referred to as "finish hot rolling" herein. The finish hot rolling may be performed with a reversible rolling mill or a tandem continuous rolling mill. The pass schedule is configured to achieve the sheet thickness after the final pass of from 5.0 to 11.0 mm and the coiling temperature described later. Also during the finish hot rolling, the recrystallized grains are suppressed from being grown by the pinning effect. The total rolling reduction ratio of the finish hot rolling may be, for example, from 65 to 85%.

Coiling

The steel sheet after completing the finish hot rolling is coiled into a coil in a state where the surface temperature is from 650 to 800ºC, so as to provide a hot rolled steel sheet. In the case where the steel sheet is coiled at a temperature lower than 650ºC, the high temperature strength is increased, which tends to cause such a state that the steel sheet cannot be coiled into a coil with a normal shape. The occurrence of the abnormal coiling leads to increase of the production cost since the steel sheet is required to be subjected to a recoiling process. In the case where the steel sheet is coiled at a higher temperature than 800ºC, dynamic secondary recrystallization is facilitated, which tends to make the crystal grains coarse. This case may leads to decrease of the K coiling, the steel sheet may be allowed to cool in the air. The effect provided by the pinning effect may be maintained even though a cooling treatment, such as water cooling, is not performed. The improvement of the low temperature toughness may be largely contributed by the decrease of the crystal grain size. It is considered that the softening of the matrix by decreasing the solid-dissolved C and N also contributes to the improvement of the low temperature toughness.

Annealing

The hot rolled steel sheet thus obtained as above is subjected to annealing at from 800 to 1,100ºC (hot rolled sheet annealing), and thereby the Ti-containing ferritic stainless steel sheet having a large gauge thickness excellent in toughness can be obtained. The annealing time may be, for example, a soaking time of from 0 to 5 minutes. The soaking time of 0 minute means the case where the material is cooled immediately after the material temperature reaches the prescribed temperature.

[Examples]

Steels shown in Table 1 were made, and continuously cast slabs having a thickness of approximately 200 mm were obtained. The chemical compositions of the steels satisfied the requirement of the invention. The continuously cast slab was placed in a heating furnace, and after retaining at a slab heating temperature shown in Table 2 depending on the types of steel for approximately from 50 to 100 minutes, the slab was taken out from the furnace and immediately subjected to rough rolling with a rough rolling mill. The extraction temperature was the same as the slab heating temperature. The rough rolling was performed by from 7 to 9 passes depending on the target finish sheet thickness, and an intermediate slab having a thickness of from 20 to 50 mm was produced. The surface temperature of the intermediate slab was measured at the outlet side of the final pass of the rough rolling mill. The temperature is shown as "Intermediate slab temperature" in Table 2. The resulting intermediate slab was subjected to finish hot rolling with a continuous hot rolling mill having a 6-stand mill or a reversible hot rolling mill having a coiler furnace, and then coiled, so as to provide a hot rolled steel sheet having the thickness shown in Table 2. The coiling temperature was obtained by measuring the surface temperature of the steel sheet immediately before the coiling machine. The resulting hot rolled steel sheet was subjected to hot rolled sheet annealing at the temperature shown in Table 2 with a soaking time of 0 minute.
A specimen was collected from the hot rolled and annealed steel sheet, Free(C+N) and the average crystal grain diameter d were measured in the aforementioned manners, from which the K value was obtained by the expression (1). A U-notch impact test piece was produced from the hot rolled and annealed steel sheet, and subjected to the Charpy impact test at 20ºC according to JIS Z2242:2005. The direction for applying an impact with a hammer (i.e., the depth direction of the U-notch) was the direction perpendicular to the rolling direction and the sheet thickness direction (i.e., the sheet width direction of the hot rolled and annealed steel strip). The results are shown in Table 2.

Table 1

| No. | Chemical composition (% by mass) | | | | | | | | | | |
|---|---|---|---|---|---|---|---|---|---|---|---|
| | C | Si | Mn | P | S | Mo | Cr | N | Al | Ti | B |
| 1 | 0.008 | 0.55 | 0.41 | 0.035 | 0.001 | 0.10 | 17.9 | 0.012 | 0.07 | 0.21 | - |
| 2 | 0.005 | 0.45 | 0.38 | 0.028 | 0.001 | 0.05 | 11.2 | 0.006 | 0.05 | 0.19 | - |
| 3 | 0.007 | 0.54 | 0.35 | 0.029 | 0.005 | 0.05 | 10.1 | 0.008 | 0.03 | 0.17 | - |
| 4 | 0.009 | 0.35 | 0.54 | 0.038 | 0.001 | 0.04 | 16.8 | 0.013 | 0.08 | 0.28 | - |
| 5 | 0.008 | 0.04 | 0.45 | 0.033 | 0.002 | 0.05 | 17.5 | 0.011 | 0.05 | 0.25 | - |
| 6 | 0.008 | 0.03 | 0.48 | 0.029 | 0.001 | 1.02 | 18.4 | 0.012 | 0.08 | 0.29 | - |
| 7 | 0.003 | 0.58 | 0.39 | 0.035 | 0.003 | - | 11.4 | 0.005 | 0.04 | 0.20 | - |
| 8 | 0.008 | 0.15 | 0.58 | 0.037 | 0.002 | 0.02 | 17.6 | 0.014 | 0.08 | 0.24 | - |
| 9 | 0.011 | 0.54 | 0.45 | 0.028 | 0.001 | 0.99 | 18.4 | 0.015 | 0.11 | 0.39 | - |
| 10 | 0.005 | 0.45 | 0.38 | 0.039 | 0.002 | - | 13.9 | 0.009 | 0.06 | 0.25 | 0.0025 |
| 21 | 0.008 | 0.45 | 0.48 | 0.039 | 0.001 | - | 16.8 | 0.012 | 0.11 | 0.22 | - |
| 22 | 0.004 | 0.55 | 0.39 | 0.038 | 0.002 | - | 10.5 | 0.007 | 0.05 | 0.25 | - |
| 23 | 0.008 | 0.65 | 0.38 | 0.031 | 0.001 | - | 17.8 | 0.008 | 0.09 | 0.29 | - |
| 24 | 0.007 | 0.25 | 0.34 | 0.033 | 0.002 | - | 10.8 | 0.013 | 0.08 | 0.25 | - |
| 25 | 0.009 | 0.51 | 0.35 | 0.031 | 0.002 | - | 17.8 | 0.011 | 0.05 | 0.27 | - |

(continued)

| No. | Chemical composition (% by mass) | | | | | | | | | | |
|---|---|---|---|---|---|---|---|---|---|---|---|
| | C | Si | Mn | P | S | Mo | Cr | N | Al | Ti | B |
| 26 | 0.008 | 0.45 | 0.33 | 0.029 | 0.001 | 0.98 | 18.4 | 0.012 | 0.07 | 0.29 | - |
| 27 | 0.004 | 0.39 | 0.29 | 0.038 | 0.005 | - | 11.4 | 0.005 | 0.02 | 0.07 | - |
| 28 | 0.006 | 0.45 | 0.38 | 0.032 | 0.003 | - | 17.6 | 0.014 | 0.05 | 0.11 | - |
| 29 | 0.008 | 0.54 | 0.41 | 0.030 | 0.001 | 1.04 | 18.4 | 0.015 | 0.08 | 0.09 | - |

Table 2

| Class | No. | Slab heating temperature (ºC) | Intermediate slab temperature (ºC) | Coiling temperature (ºC) | Hot rolled sheet annealing temperature (ºC) | Hot rolled and annealed steel sheet | | | | |
|---|---|---|---|---|---|---|---|---|---|---|
| | | | | | | Sheet thickness (mm) | Free (C+N) (% by mass) | Average crystal grain diameter d ($\mu$m) | K value | 20ºC U-notch impact value (J/cm$^2$) |
| Example of Invention | 1 | 1080 | 840 | 785 | 1080 | 8.5 | 0.0006 | 40 | 167.4 | 158 |
| | 2 | 990 | 700 | 680 | 800 | 9.8 | 0.0004 | 20 | 210.3 | 205 |
| | 3 | 1000 | 700 | 675 | 1050 | 7.9 | 0.0005 | 32 | 186.3 | 191 |
| | 4 | 1060 | 830 | 735 | 1000 | 5.4 | 0.0005 | 40 | 174.3 | 164 |
| | 5 | 1100 | 830 | 740 | 950 | 10.9 | 0.0002 | 68 | 154.3 | 153 |
| | 6 | 1050 | 840 | 690 | 1095 | 5.2 | 0.0003 | 32 | 199.3 | 202 |
| | 7 | 980 | 785 | 740 | 810 | 9.8 | 0.0001 | 25 | 223.4 | 225 |
| | 8 | 1070 | 820 | 725 | 1080 | 9.2 | 0.0002 | 32 | 206.1 | 196 |
| | 9 | 1110 | 835 | 718 | 1050 | 10.3 | 0.0006 | 52 | 150.1 | 152 |
| | 10 | 1010 | 810 | 795 | 1000 | 5.1 | 0.0004 | 48 | 169.7 | 160 |
| Comparative Example | 21 | 1220 | 950 | 905 | 1100 | 5.2 | 0.0010 | 78 | 85.6 | 79 |
| | 22 | 1215 | 940 | 900 | 1050 | 9.7 | 0.0000 | 108 | 110.7 | 108 |
| | 23 | 1275 | 1050 | 945 | 1070 | 10.5 | 0.0009 | 90 | 75.0 | 70 |
| | 24 | 1150 | 940 | 860 | 840 | 9.5 | 0.0008 | 115 | 46.3 | 40 |
| | 25 | 1200 | 860 | 815 | 1090 | 8.1 | 0.0003 | 78 | 133.1 | 135 |
| | 26 | 1225 | 920 | 850 | 1050 | 5.4 | 0.0000 | 98 | 124.6 | 123 |
| | 27 | 1205 | 900 | 810 | 800 | 6.0 | 0.0006 | 65 | 131.9 | 134 |
| | 28 | 1230 | 907 | 865 | 1070 | 5.5 | 0.0006 | 58 | 141.5 | 145 |
| | 29 | 1090 | 770 | 610 | 1050 | 9.8 | 0.0013 | 40 | 119.8 | 125 |

The hot rolled steel sheets produced under the condition where the K value was 150 or more according to the invention (Examples of Invention) had an impact value by the U-notch impact test piece at 20ºC of 150 J/cm$^2$ or more and had good toughness.

In Nos. 21, 22, 23, 24, 25, 26, 27, and 28 as Comparative Examples, the pinning effect due to the precipitation of TiC and the like was not obtained since the slab heating temperature, the intermediate slab temperature, or the coiling temperature was deviated higher than the examples of the invention, and the average crystal grain diameter was increased, resulting in decrease of the toughness. No. 29 satisfied the requirements of the invention for the slab heating temperature and the intermediate slab temperature, but the coiling temperature was lower to deteriorate the shape of the coiled coil. Furthermore, the contents of C and N in the steel were large, but the amount of Ti was small, and thus Free (C+N) was increased, resulting in decrease of the toughness.

**Claims**

1. A Ti-containing ferritic stainless steel sheet having a chemical composition containing, in terms of percentage by mass, from 0.003 to 0.030% of C, 2.0% or less of Si, 2.0% or less of Mn, 0.050% or less of P, 0.040% or less of S, from 10.0 to 19.0% of Cr, 0.030% or less of N, from 0.07 to 0.50% of Ti, and from 0.010 to 0.20% of Al, with the balance of Fe and unavoidable impurities, having a K value defined by the following expression (1) of 150 or more, and having a sheet thickness of from 5.0 to 11.0 mm:

$$K \text{ value} = -0.07 \times Cr - 6790 \times Free(C+N) - 1.44 \times d + 267 \qquad (1)$$

   wherein in the expression (1), Cr represents a Cr content (% by mass) in the steel; Free (C+N) represents a value (% by mass) obtained by subtracting a total content (% by mass) of C and N present in an extraction residue recovered by an electrolytic extraction method, from a total content (% by mass) of C and N present in the steel; and d represents an average crystal grain diameter ($\mu$m) obtained for an observation surface obtained by polishing a cross section (L cross section) in parallel to a rolling direction and a sheet thickness direction, by an intercept method with a linear testing line defined in Annex C of JIS G0551:2013.

2. The Ti-containing ferritic stainless steel sheet according to claim 1, wherein the Ti-containing ferritic stainless steel sheet has the chemical composition further containing, in terms of percentage by mass, 1.50% or less of Mo.

3. The Ti-containing ferritic stainless steel sheet according to claim 1, wherein the Ti-containing ferritic stainless steel sheet has the chemical composition further containing, in terms of percentage by mass, 0.0030% or less of B.

4. A method for manufacturing the Ti-containing ferritic stainless steel sheet according to any one of claims 1 to 3, comprising:

   a step of heating a slab of a steel having the chemical composition in a heating furnace, then taking out the slab at a temperature of from 950 to 1,120ºC from the furnace, rolling the slab with a rough rolling mill to provide an intermediate slab having a sheet thickness of from 20 to 50 mm and a surface temperature of from 700 to 850ºC, then hot-rolling the intermediate slab to a sheet having a thickness of from 5.0 to 11.0 mm, and then coiling the sheet at a surface temperature of from 650 to 800ºC, so as to provide a hot rolled steel sheet; and
   a step of annealing the hot rolled steel sheet at from 800 to 1,100ºC.

5. A flange using the Ti-containing ferritic stainless steel sheet according to any one of claims 1 to 3.

6. The flange according to claim 5, wherein the flange is a flange for an exhaust gas flow path.

7. The flange according to claim 5, wherein the flange is a flange for an automobile exhaust gas flow path.

## INTERNATIONAL SEARCH REPORT

| International application No. |
| --- |
| PCT/JP2017/002300 |

### A. CLASSIFICATION OF SUBJECT MATTER

*C22C38/00*(2006.01)i, *C21D8/02*(2006.01)i, *C21D9/46*(2006.01)i, *C22C38/38* (2006.01)i

According to International Patent Classification (IPC) or to both national classification and IPC

### B. FIELDS SEARCHED

Minimum documentation searched (classification system followed by classification symbols)
C22C38/00, C21D8/02, C21D9/46, C22C38/38

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2012-140687 A (Nisshin Steel Co., Ltd.), 26 July 2012 (26.07.2012), (Family: none) | 1-7 |
| A | JP 2015-187290 A (Nippon Steel & Sumikin Stainless Steel Corp.), 29 October 2015 (29.10.2015), & WO 2015/147211 A1 & EP 3124635 A1 & CN 106133166 A & KR 10-2016-0123371 A | 1-7 |
| A | JP 2008-208412 A (Nippon Steel & Sumikin Stainless Steel Corp.), 11 September 2008 (11.09.2008), & KR 10-2008-0079178 A & CN 101255532 A | 1-7 |

[X] Further documents are listed in the continuation of Box C.   [ ] See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 April 2017 (20.04.17) | 09 May 2017 (09.05.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2017/002300

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2013/085005 A1 (Nippon Steel & Sumikin Stainless Steel Corp.), 13 June 2013 (13.06.2013), & US 2014/0294660 A1 & CN 103857812 A & KR 10-2014-0064907 A | 1-7 |
| A | JP 2000-73123 A (Kawasaki Steel Corp.), 07 March 2000 (07.03.2000), (Family: none) | 1-7 |
| E,A | JP 6067161 B1 (Nisshin Steel Co., Ltd.), 25 January 2017 (25.01.2017), (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60228616 A
- JP 6456822 A
- JP 2012140688 A